Europäisches Patentamt

European Patent Office

Office européen des brevets

(19)

(11) Publication number: **0 247 010 B1**

## EUROPEAN PATENT SPECIFICATION

(12)

(45) Date of publication of patent specification: **24.07.91**

(51) Int. Cl.⁵: **A01G 9/24**, A01G 9/22

(21) Application number: **87830183.7**

(22) Date of filing: **14.05.87**

The file contains technical information submitted
after the application was filed and not included in
this specification

(54) **Apparatus for winding and unwinding a plastic film of side walls in greenhouses for other uses.**

(30) Priority: **16.05.86 IT 939686**

(43) Date of publication of application:
**25.11.87 Bulletin 87/48**

(45) Publication of the grant of the patent:
**24.07.91 Bulletin 91/30**

(84) Designated Contracting States:
**CH ES FR GR LI**

(56) References cited:
**EP-A- 137 050**
**DE-A- 1 509 590**
**DE-A- 2 339 266**
**FR-A- 2 494 957**

(73) Proprietor: **Campioni, Omero**
**Via di Colmata 19**
**I-55015 S. Salvatore di Montecarlo Fraz.**
**Comune di Montecarlo Lucca(IT)**

Proprietor: **Campioni, Lido**
**Via di Colmata 19**
**I-55015 S. Salvatore di Montecarlo Fraz.**
**Comune di Montecarlo Lucca(IT)**

(72) Inventor: **Campioni, Omero**
**Via di Colmata 19**
**I-55015 S. Salvatore di Montecarlo Fraz.**
**Comune di Montecarlo Lucca(IT)**
Inventor: **Campioni, Lido**
**Via di Colmata 19**
**I-55015 S. Salvatore di Montecarlo Fraz.**
**Comune di Montecarlo Lucca(IT)**

(74) Representative: **Mannucci, Gianfranco,**
**Dott.-Ing.**
**Ufficio Tecnico Ing. A. Mannucci Via della**
**Scala 4**
**I-50123 Firenze(IT)**

## Description

The invention refers to an apparatus for controlling the opening and the shutting of flexible walls of greenhouses and tunnels by winding and unwinding of a shutting plastic film and/or of shady and/or darkening films or nets onto and from a mobile winding and unwinding roller to which the lower edge of said film is engaged, comprising a driving reduction gear supported by a mounting plate pivotally mounted onto the structure of the greenhouse, and an articulated shaft which connects said winding and unwinding roller to said reduction gear, whereby during lifting and lowering of the film the mounting plate supporting the reduction gear is able to oscillate in a plane about an axis perpendicular to said plane.

At present, for the aeration of the modern greenhouses, tunnels or the like, plastic films are used, in lieu of glazed surfaces, by operating the winding and unwinding thereof; it is thus possible to adjust at will the opening of the walls, according to actual necessities.

The winding and unwinding operation has been so far obtained through means which - although achieving the object - have several drawbacks, especially in the version with driving through an electric motor. In particular, during vertical sliding - operated by a gearmotor - drawbacks occur due to misalignment conditions which hinder a regular up and down motion.

DE-A-23 39 266 discloses an apparatus of the above mentioned type, which overcomes drawbacks connected to misalignments of the driving mechanisms for controlling winding and unwinding of the plastic films. This known apparatus comprises a winding and unwinding roller extending over the whole length of the lateral wall of the greenhouse. The roller is supported by an extensible oscillating arm which is pivoted to the front wall of the greenhouse and is able to rotate about an axis parallel to the axis of the greenhouse. This known apparatus, even though reliable from mechanical point of view, has some disadvantages.

The object of the invention is to eliminate drawbacks of the prior art and to achieve a regular and safe winding, both in the case of gearmotor actuation and in the case of crank actuation, in which case a single person can operate the opening even of significant lengths of greenhouse with little effort and block it in any position without necessitating ratchet gears or hook fasteners.

This is obtained, according to the invention, by an apparatus as defined in the preamble of claim 1, further characterized in that the mobile winding and unwinding roller is substantially parallel to said plane.

In a practical embodiment, between the controlling reduction gear and the winding and unwinding roller there is interposed a rod transmission shaft having two cardanic joints at its ends, for the coupling to the winding and unwinding roller on one side and to the slow output shaft of the reduction gear, which is mounted on the oscillating plate, on the other side.

The reduction gear can be a worm screw type reduction gear or a different irreversible gear.

The mechanism has limited overall dimensions, since the oscillation required to completely lift the wall is not of great extent. Usually, the oscillating plate is vertically arranged when the film is completely lifted or completely lowered.

The apparatus may be used not only for continuous sheets or films, but the same apparatus may be used for shady or darkening sheets or other.

The invention will be better understood by following the description and the attached drawing, which shows a practical non limitative exemplification of the same invention. In the drawing:

Fig. 1 shows an ensemble front view of the apparatus in the intermediate position and in the motorized version;

Figs. 2 and 3 show enlarged portions of Fig. 1;

Fig. 4 shows a side view, with the gearmotor axis in a vertical arrangement;

Figs. 5 and 6 show a partial front view of the apparatus in the manually operated version, and a side view of a vertical arrangement thereof.

According to the example of Figs. I to 4, a shutting plastic film sheet 1, forming for example the mobile, side, vertical wall of a greenhouse, is engaged by clamps or clips 2 on a winder or sheet-roller 3 which is movable and, in this particular case, slidable within vertical guides 4 located on the greenhouse poles. The end of the sheet-roller 3 is driven into rotation, through two cardanic joints 5 and a transmission rod 6, in the proper direction according to the rotation of the slow shaft of a gearmotor 7. Said gearmotor 7 is mounted on a plate 8 pendulum-like oscillating about an articulation 9 which restraines it to a support 10 fixed to a post 11. During the lifting or the lowering, the sheet-roller 3 compels the plate 8, on which the reduction gear 7 is mounted for the rotation thereof, to perform an angular displacement not greater than 45°, in order to allow the transmission from the gearmotor 7, including the rod 6 and the joints 5, to follow the rigid vertical trajectory of the end 3A of the sheet-roller 3. Accordingly, the reduction gear 7, instead of moving upwards and downwards along with the sheet-roller 3 (as in other devices), maintains approximately the same initial position by just performing only limited angular displacements around the fulcrum 9 which remains at a constant level.

The oscillating plate 8 may consist of a U-pressed plate performing its angular oscillations about the pivot 9, in respect to the support 10, which may be made of L-pressed plate; said support is connected, at a suitable height, through small bolts, to the first vertical pole 11 of the greenhouse or the tunnel. The pressed plate of the support 10 has also a guide function for the oscillating plate 8.

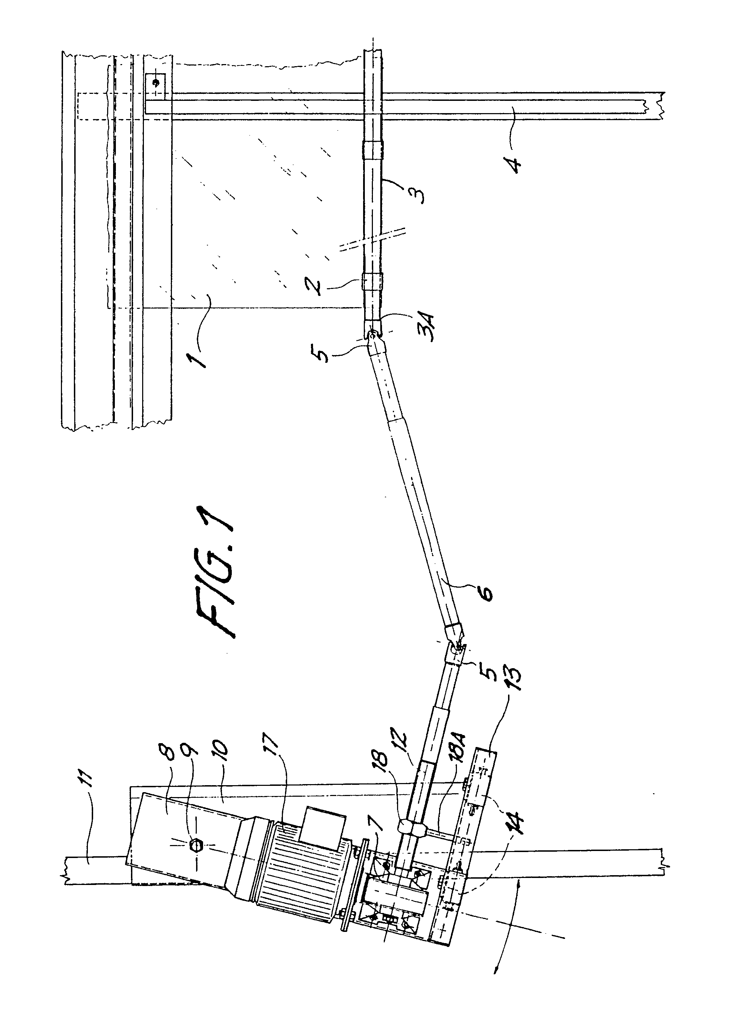

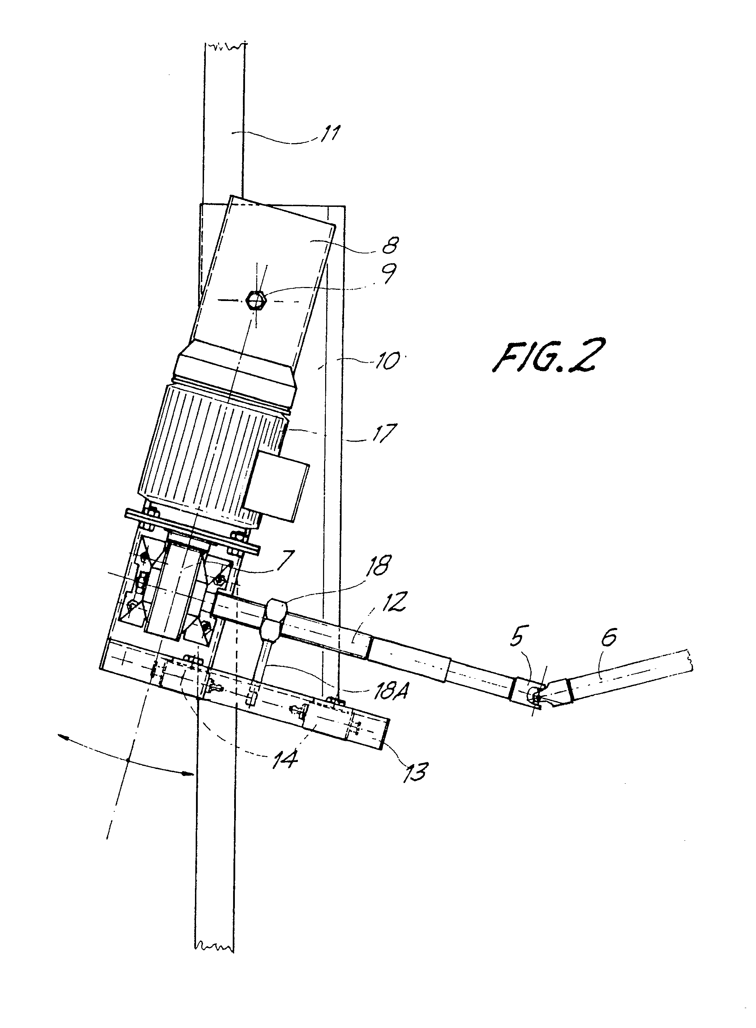

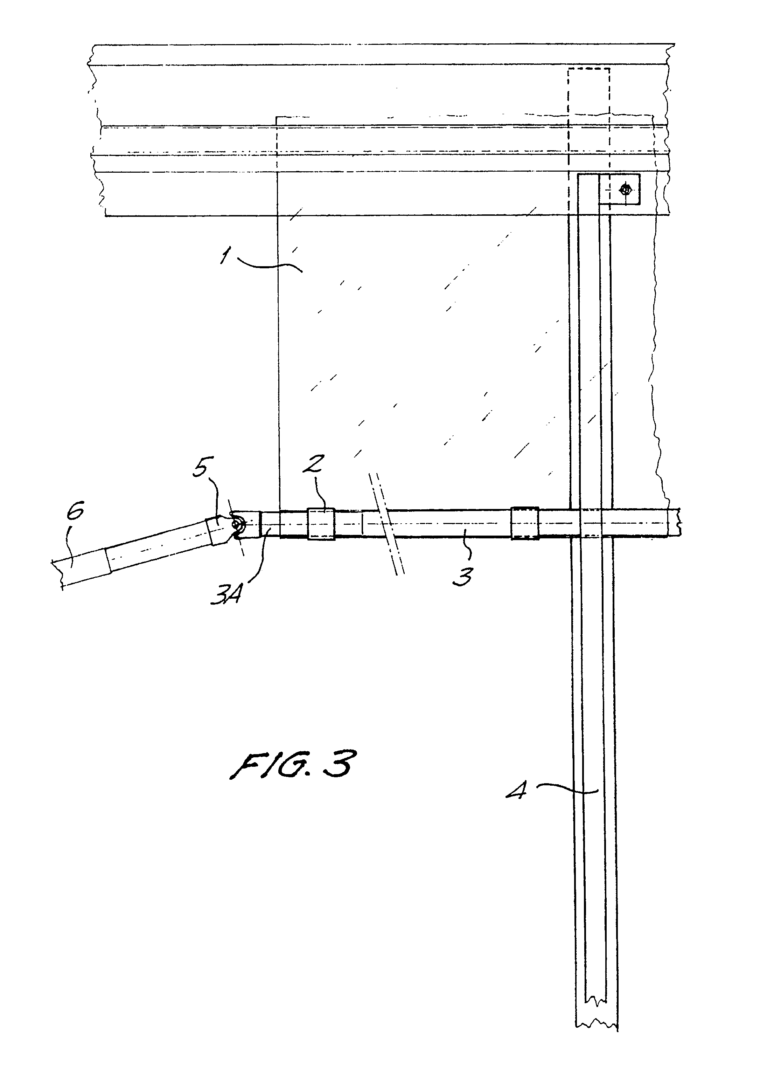

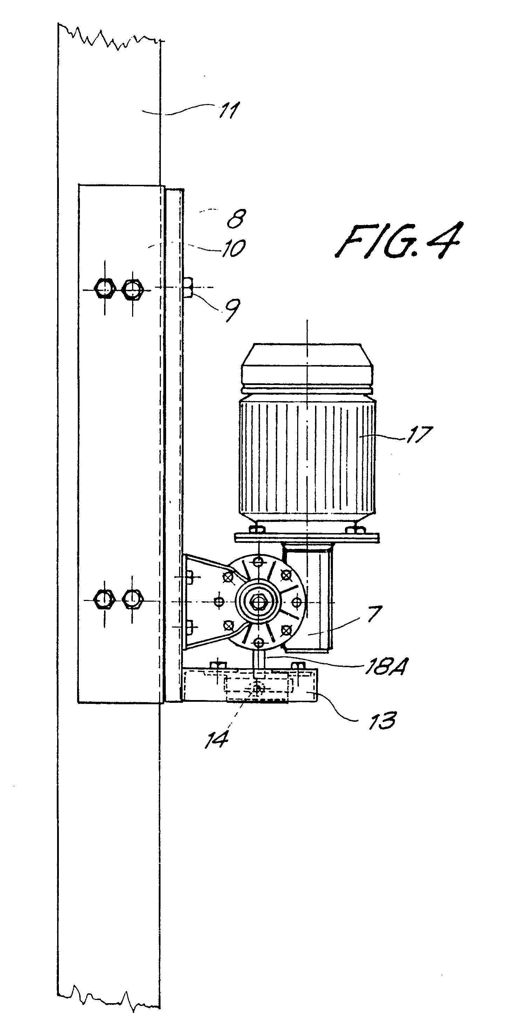

The winding system described above with reference to Figs. 1 to 4 is of motorized type being powered by the gearmotor 7. In case of motorized actuation, the apparatus must be provided with an automatic limit-switch device. Such device may comprise a screw 12 which serves as a connecting shaft between the reduction gear 7 and the transmission rod 6, coupled through one of the cardanic joints 5; said screw, by rotating in one direction or the other for the lifting or lowering phase of the roller 3 of the wall 1, makes a nut 18 axially move forwards and backwards, this nut being forced to perform this motion, because it is welded to a T-shaped appendix 18A slidingly guided within a slot of a bracket 13. This bracket 13 is connected to the oscillating plate 8, thereby performing an oscillation therealong. Inside this bracket 13, two opposite limit-switches 14 are located, which can be adjusted as far as their position and interspace are concerned, in such a way as to obtain up and down movements of desired extents of the mobile walls 1. The nut 18 acts, through its T-shaped appendix - when it reaches its final position corresponding to the maximum opening or to the maximum shutting of the wall - against one or the other of the two limit switches which control the stop of the motor 17 of the reduction gear 7.

The same apparatus may be applied in greenhouses of different height and also inside walls having non vertical and even non flat development but, instead, a cylindrical curvature.

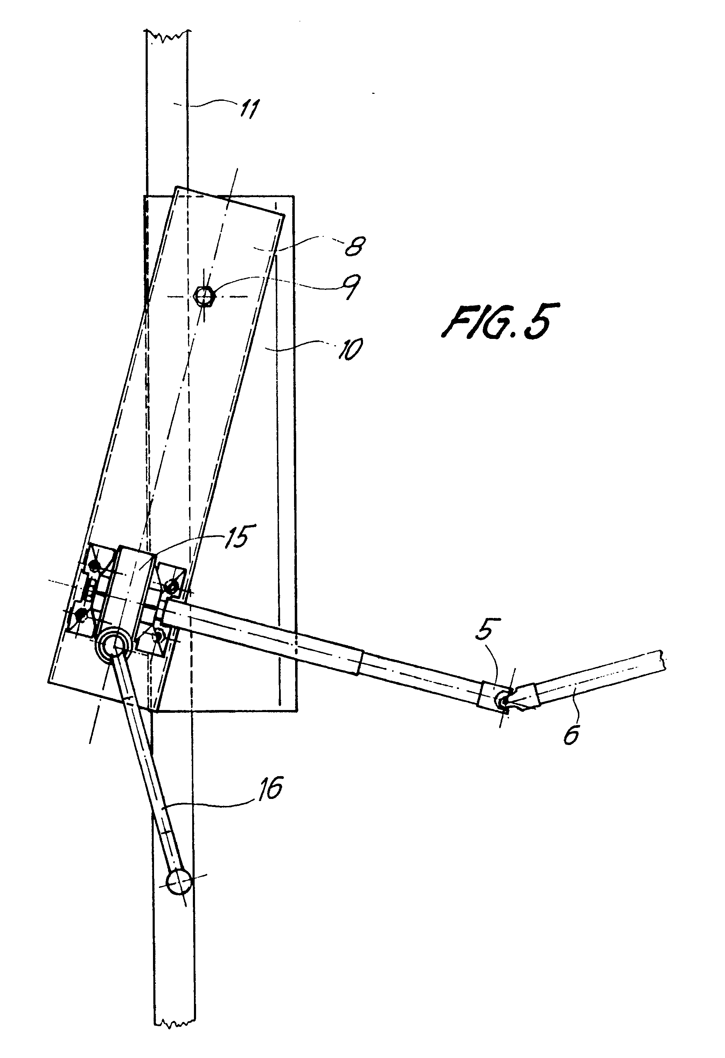

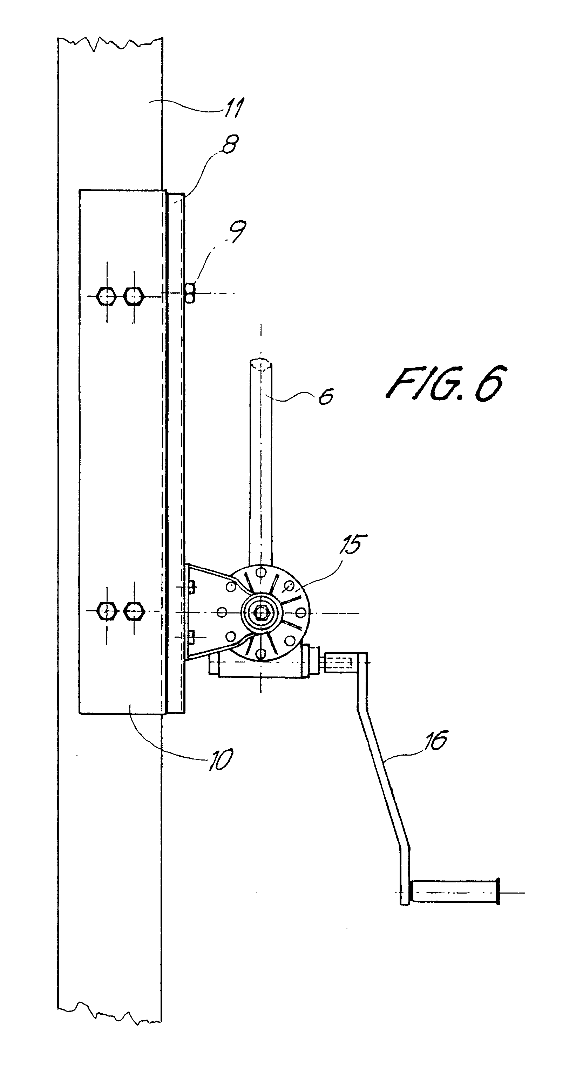

In case of manual operation, as illustrated in Figs. 5 and 6, a suitable reduction gear 15 is still used, similar to that indicated by 7, but with the screw of the fast shaft being horizontally, rather than vertically, disposed. On the fast shaft - that is, that of the screw - a crank 16 is provided which allows the mobile wall 1 to be lifted by a modest effort even in case of considerable lengths.

Since both the above solutions provide irreversible reduction gears, a blockage is obtained in whatever position the apparatus is stopped, without needing to block the roller 3 into the reached and desired position.

The manually-operated apparatus is fully similar to the motorized one while being simpler as it lacks in motor, bracket 13, limit-switches 14 and adjustable nut 18. The crank is always more or less at the same height, being selected for an easy manoeuvre.

It is understood that the drawing shows only an exemplification, given only as a practical demonstration of the invention. For example, a guard-case may be provided for the whole apparatus against the action of atmospheric agents.

## Claims

1. Apparatus for controlling the opening and the shutting of flexible walls of greenhouses and tunnels by winding and unwinding of a shutting plastic film (1) and/or of shady and/or darkening films or nets onto and from a mobile winding and unwinding roller (3) to which the lower edge of said film is engaged, comprising a driving reduction gear (7; 15) supported by a mounting plate (8) pivotally mounted onto the structure of the greenhouse, and an articulated shaft (5, 6, 5) which connects said winding and unwinding roller (3) to said reduction gear (7; 15), whereby during lifting and lowering of the film the mounting plate (8) supporting the reduction gear (7; 15) is able to oscillate in a plane about an axis perpendicular to said plane, characterized in that the mobile winding and unwinding roller (3) is substantially parallel to said plane.

2. Apparatus according to claim 1, characterized in that between the driving reduction gear (7; 15) and the winding and unwinding roller (3) a rod transmission shaft (6) is interposed having two cardanic joints (5) at the ends, for coupling to the winding and unwinding roller (3) on one side and to the slow output shaft (12) of the reduction gear (7; 15), which is mounted on the oscillating plate (8), on the other side.

3. Apparatus according to claim 1 or 2, characterized in that the reduction gear (7) is an irreversible screw-type gear driven through a crank (16) or an electric motor (17).

4. Apparatus according to any preceding claim, characterized in that the reduction gear (7) is driven through an electric motor (17), and that the winding and unwinding roller (3) is automatically stopped by means of two limit switches (14) cooperating with a means (18A) which is movable in relation to the displacements performed by said winding and unwinding roller (3).

5. Apparatus according to claim 4, characterized in that said limit switches (14) are housed within a channel-shaped bracket (13) connected to the oscillating plate (8) and along which a shoe (18A) slides which is associated with a nut (18) engaged in a threading of the output shaft (12) of the reduction gear (7; 15).

**Revendications**

1. Dispositif pour contrôler l'ouverture et la fermeture de parois flexibles de serres et tunnels par un système d'enroulement et de déroulement d'une pellicule plastique de fermeture (1) et/ou de pellicules ou filets permettant d'ombrer et/ou d'assombrir en s'enroulant sur ou se déroulant d'un rouleau enrouleur et dérouleur mobile (3), auquel le bord inférieur de ladite pellicule est engagé, comprenant une transmission de réduction (7; 15) soutenue par un socle (8) monté sur pivot à la structure de la serre, et un arbre articulé (5,6,5) reliant le dit rouleau enrouleur et dérouleur (3) à la dite transmission (7; 15) de sorte que, lors de l'action de soulèvement et d'abaissement de la pellicule, le socle (8) soutenant la transmission (7; 15) peut osciller dans un plan autour d'un axe perpendiculaire au dit plan, caractérisé en ce que le rouleau d'enroulement et de déroulement mobile (3) est substantiellement parallèle au dit plan.

2. Dispositif selon la revendication 1, caractérisé en ce que un arbre de transmission (6) à tige, pourvu de joints de cardan à chaque extrémité, est interposé entre la transmission de réduction (7; 15) et le rouleau enrouleur et dérouleur (3) pour être relié au rouleau enrouleur et dérouleur (3) d'un côté et à l'arbre entrainé de la transmission de réduction (7;l5), montée sur la plaque oscillante (8), de l'autre côté.

3. Dispositif selon la revendication 1 ou 2, caractérisé en ce que la transmission (7) est de type vis sans fin irréversible, entrainée par une manivelle (16) ou un moteur électrique (17).

4. Dispositif selon l'une ou l'autre des revendications précédentes, caractérisé en ce que la transmission (7) est entrainée par un moteur électrique (17) et que le rouleau enrouleur et dérouleur (3) est automatiquement arrêté par deux interrupteurs de fin de course (14) fonctionnant avec une pièce (18A) mobile selon les déplacements effectués par le rouleau enrouleur et dérouleur (3).

5. Dispositif selon la revendication 4, caractérisé en ce que les dits interrupteurs de fin de course (14) sont logés dans une patte d'attache rainurée (13) reliée à la plaque oscillante (8) et le long de laquelle coulisse un organe de glissement (18A), relié à un écrou (18) engagé dans un filetage de l'arbre entrainé (12) de la transmission de réduction (7;15).

**Patentansprüche**

1. Vorrichtung zum Oeffnen und Schliessen von flexiblen Wänden von Gewächshäusern und Tunnels durch Auf- und Abwickeln eines Plastikfilms (1) und/oder eines abschattenden oder verdunkelnden Films oder Streifen auf und von einer Auf- und Abwickelrolle (3), an welcher der untere Rand des genannten Films verbunden ist, die ein auf einer an der Struktur des Gewächshäuses gelenkig verbundenen Halterungsplatte (8) gelagertes Untersetzungsgetriebe (7; 15) und eine Gelenkwelle (5, 6, 5) umfaßt, welche die Auf- und Abwickelrolle mit dem genannten Untersetzungsgetriebe (7; 15) verbindet, wobei während des Hebens und Senkens des Films die das Untersetzungsgetriebe (7, 15) abstützende Halterungsplatte (8) in der Lage ist, in einer Ebene um einer Achse zu schwenken, die senkrecht zu der genannten Ebene liegt, dadurch gekennzeichnet, daß die bewegliche Auf- und Abwickelrolle (3) wesentlich parallel zu der genannten Ebene steht.

2. Vorrichtung nach Anspruch 1, dadurch gekennzeichnet, daß zwischen das Untersetzungsgetriebe (7; 15) und die Auf- und Abwickelrolle (3) eine Nebenwellestange eingebaut ist, deren Enden mit zwei Kreuzgelenken ausgerüstet sind, zur Kupplung einerseits an dem Auf- und Abwickelrolle (3) und andererseits an der langsamen Abtriebswelle (12) des auf der schwenkenden Platte (8) gelagerten Untersetzungsgetriebe (7; 15).

3. Vorrichtung nach Anspruch 1 oder 2, dadurch gekennzeichnet, daß das Untersetzungsgetriebe (7) eine selbstsperrende Schraubenkuppel ist, die mittels einer Kurbel (16) oder eines Elektromotors (17) angetriben ist.

4. Vorrichtung nach einem der vorhergehenden Ansprüche, dadurch gekennzeichnet, daß das Untersetzungsgetriebe mittels eines elektrischen Motors (17) betrieben wird, und daß die Auf- und Abwickelrolle (3) mit Hilfe von zwei Endschaltern (14) gestoppt wird, die mit einem Mittel (18A) zusammenwirken, das im Bezug auf die von der genannten Auf- und Abwickelrolle (3) ausgeführten Verschiebungen beweglich ist.

5. Vorrichtung nach Anspruch 4, dadurch gekennzeichnet, daß die genannten Endschalter (14) in einem kanalförmigen Tragarm (13) untergebracht sind, die mit der schwenkenden Platte (8) verbunden ist, und entlang welcher eine Backe (18A) gleitet, die wiederum mit einer Mutter (18) verbunden ist, die auf ein Gewinde der Abtriebswelle (12) des Untersetzungsgetriebe (7; 15) aufgeschraubt ist.

FIG.1

FIG.2

FIG. 3

FIG. 4

*FIG.5*

11

*FIG.6*